# EUROPÄISCHE PATENTSCHRIFT

(11) **EP 1 982 799 B1**
(45) Veröffentlichungstag und Bekanntmachung des Hinweises auf die Patenterteilung: **28.04.2010**
(21) Anmeldenummer: 08405056.6
(22) Anmeldetag: 22.02.2008
(51) Int. Cl.: B25J 9/04

(54) **Handhabungsanordnung**
Handling device
Agencement de manipulation

(30) Priorität: 10.04.2007 CH 5872007
(43) Veröffentlichungstag der Anmeldung: 22.10.2008
(73) Patentinhaber: Erowa AG, 5734 Reinach (CH)
(72) Erfinder: Sandmeier, Bruno, 5708 Birrwil (CH)
(74) Vertreter: Rottmann, Maximilian

(56) Entgegenhaltungen:
- EP-A- 1 623 773
- DE-A-102004 012 346
- JP-A- 5 076 965
- JP-A- 2001 158 507
- JP-A- 2004 090 186

## Beschreibung

Die Erfindung betrifft eine Handhabungsanordnung gemäss dem Oberbegriff des Anspruchs 1, die Verwendung einer Handhabungsanordnung gemäss dem Anspruch 15 sowie eine Werkzeugmaschinenanordnung gemäss dem Oberbegriff des Anspruchs 16.

Um einer Bearbeitungsmaschine wie beispielsweise einer Drehmaschine, einer Fräsmaschine, einer Senkerodiermaschine, einer Schneiderodiermaschine etc. die zu bearbeitenden Werkstücke vollautomatisch zuzuführen bzw. die bearbeiteten Werkstücke entnehmen zu können sind Handhabungsanordnungen wie beispielsweise Roboter bekannt. Neben Werkstücken können mit den hier zur Rede stehenden Handhabungsanordnungen natürlich auch Bearbeitungswerkzeuge zugeführt bzw. entnommen werden.

Aus der EP-A-1 481 759 ist eine gattungsgemässe Handhabungsanordnung bekannt. Die Handhabungsanordnung weist ein Horizontalportal auf, an dem ein erster Schlitten horizontal verfahrbar ist. Der erste Schlitten ist mit einem länglichen Träger versehen, an dem ein weiterer Schlitten vertikal verfahrbar ist. An dem weiteren Schlitten ist ein um eine horizontale Achse verschwenkbarer Arm gelagert. Am Ende des Arms ist ein Greifer für Werkstücke angeordnet. Die Handhabungsanordnung soll insbesondere dazu geeignet sein, tief in eine seitliche Öffnung einer Werkzeugmaschine hineingreifen zu können.

In der JP-A-2004 090186 ist eine gattungsgemässe Handhabungsanordnung in Form eines Transfer-Roboters offenbart. Dieser weist einen sich in vertikaler Richtung erstreckenden, um eine vertikale Achse drehbaren Hauptträger auf, an dem ein in vertikaler Richtung verfahrbaren Horizontalausleger abgestützt ist. Gemäss einem ersten Ausführungsbeispiel (Varianten 200A bis 200C) besteht der Horizontalausleger aus zwei axial hintereinander und vertikal übereinander angeordneten plattenartigen Trägem. Der erste Träger ist fest mit zwei am Hauptträger angeordneten Bügeln verbunden, während der zweite Träger mit einem axial verfahrbaren, um eine horizontale Achse verdrehbaren Gabelteil versehen ist. Bei einem zweiten Ausführungsbeispiel (Varianten 200D und 200E) ist der Horizontalausleger mit zwei um je eine vertikale Achse drehbaren Schwenkarmen versehen, wobei der Gabelteil entweder um eine horizontale oder vertikale Achse verdrehbar ist. Während bei der erste Variante nur sehr bedingte Bewegungen des Gabelteils möglich sind, ist die zweite Variante mit zwei Schwenkarmen einerseits relativ aufwändig und andererseits dürften damit nur kleine Lasten gehoben werden können. Bei beiden Ausführungsbeispielen hat der Roboter zudem eine beschränkte Flexibilität, indem der Bewegungsbereich, namentlich der horizontale Verschiebeweg des Greifers, eingeschränkt ist.

Schliesslich ist aus der JP-A-05076965 ein Roboter bekannt, der auf einer Schiene verfahrbar zwischen zwei horizontal beabstandeten Pressen angeordnet ist, um auf geradem Weg Werkstücke von der einen zu der anderen Presse zu transportieren. Der Roboter ist derart ausgelegt, dass sich dessen Roboterarm während des horizontalen Verschiebens des Roboters gleichzeitig um eine vertikale Achse drehen kann.

Die Erfindung zielt darauf ab, eine Handhabungsanordnung nach dem Oberbegriff des Anspruchs 1 derart weiterzubilden, dass sie universell einsetzbar ist und sich in besonders vorteilhafter Weise dazu eignet, einer Werkzeugmaschine von vorne Werkstücke oder Werkzeuge zuzuführen bzw. zu entnehmen, wobei die Handhabungsanordnung den Zugang zu der Werkzeugmaschine nicht nennenswert behindern soll und wobei sie zudem relativ einfach und stabil aufgebaut sein soll.

Diese Aufgabe wird erfindungsgemäss mit der im Anspruch 1 angegebenen Handhabungsanordnung gelöst.

Die im Anspruch 1 definierte Handhabungsanordnung mit zwei Drehachsen sowie einer vertikalen und einer horizontalen Linearachse besitzt eine hohe Flexibilität bei einfachem und stabilem Aufbau. Die beanspruchte Handhabungsanordnung kann innerhalb eines virtuellen Zylinderraums mit Ausnahme eines Mittelabschnitts jeden Punkt anfahren. Die Linearführung des horizontal verfahrbaren Horizontalauslegers, der auf der Unterseite eines Vertikalschlittens abgestützt ist, ermöglicht zudem einen grossen horizontalen Verschiebeweg des Horizontalauslegers, und damit natürlich auch des Greifers, bei vergleichsweise geringem Energieaufwand und hoher Präzision.

Die abhängigen Ansprüche 2 bis 14 definieren bevorzugte Weiterbildungen der Handhabungsanordnung gemäss Anspruch 1.

Wenn der Hauptträger, wie in einem bevorzugten Ausführungsbeispiel definiert ist, auf einem horizontal verfahrbaren Hauptschlitten angeordnet ist, erhöht sich die Flexibilität der Handhabungsanordnung indem der Bewegungsbereich vergrössert wird.

Bei einem weiteren bevorzugten Ausführungsbeispiel ist vorgesehen, den Greifer mittels einer Gelenkvorrichtung an dem Knickarm abzustützen, wobei die Drehachse der Gelenkvorrichtung mit der Senkrechten einen Winkel zwischen 30° und 60°, vorzugsweise 45° einschliesst. Dadurch wird ermöglicht, dass die Werkstücke oder Werkzeuge nicht nur horizontal sondern unter einem Winkel erfasst bzw. übergeben werden können.

Eine weitere Aufgabe der Erfindung besteht darin, eine Werkzeugmaschinenanordnung, die zumindest eine Werkzeugmaschine sowie eine Handhabungsanordnung umfasst, derart zu gestalten, dass ein ungehinderter Zugang zu der Werkzeugmaschine über deren frontale Öffnung ermöglicht wird.

Diese Aufgabe wird mit der Werkzeugmaschinenanordnung gemäss dem Anspruch 16 gelöst.

Bevorzugte Weiterbildungen der Werkzeugmaschinenanordnung sind in den abhängigen Ansprüchen 17 und 18 definiert.

Nachfolgend wird ein bevorzugtes Ausführungsbeispiel der Erfindung anhand von Zeichnungen näher erläutert. Dabei zeigt:
- Fig. 1: eine schematisch dargestellte Handhabungsanordnung in einer ersten Ansicht;
- Fig. 2: die Handhabungsanordnung gemäss Fig. 1 in einer weiteren Ansicht;
- Fig. 3 bis 8: die Handhabungsanordnung in verschiedenen Phasen während des Zuführens eines Werkstückträgers in eine Werkzeugmaschine, und
- Fig. 9: eine Draufsicht auf eine schematisch dargestellte Werkzeugmaschinenanordnung mit einer Handhabungsanordnung, zwei Werkzeugmaschinen sowie zwei Magazinen.

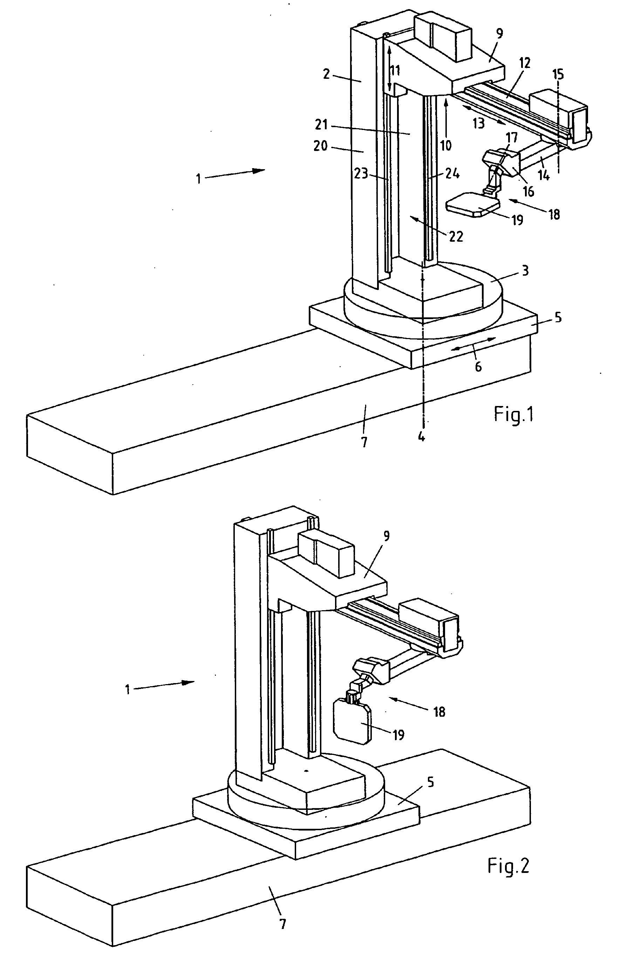

Anhand der Fig. 1 wird der grundsätzliche Aufbau eines Ausführungsbeispiels der erfindungsgemässen Handhabungsanordnung erläutert. Die Handhabungsanordnung 1 umfasst einen vertikalen Hauptträger 2, der auf einem Drehteller 3 angeordnet ist. Im vorliegenden Beispiel ist der Hauptträger 2 zentrisch auf dem Drehteller 3 angeordnet, wobei natürlich auch eine exzentrische Anordnung möglich wäre. Der um eine vertikale Achse 4 drehbare Drehteller 3 ist auf einem horizontal verfahrbaren Hauptschlitten 5 fixiert, der, wie durch einen Doppelpfeil 6 angedeutet, entlang einer Laufschiene 7 verfahrbar ist. Am vertikalen Hauptträger 2 ist ein in vertikaler Richtung verfahrbarer Vertikalschlitten 9 angeordnet. Die Verschieberichtung des Vertikalschlittens 9 ist wiederum durch einen Doppelpfeil 11 angedeutet. Der Vertikalschlitten 9 umfasst einen stabilen Tragkörper 9a, auf dessen Unterseite 10 ein in horizontaler Richtung verschiebbar Horizontalausleger 12 angeordnet ist, dessen Verschieberichtung ebenfalls durch einen Doppelpfeil 13 angedeutet ist. Der Horizontalausleger 12 ist mittels einer Linearführung -Gleitführung-, vorzugsweise in der Form eines Lineargleitlagers, einer Schwalbenschwanzführung oder einer Schienenführung an dem Vertikalschlitten 9 abgestützt. Diese Linearführung ermöglicht einen grossen horizontalen Verschiebeweg des Horizontalauslegers 12 bei vergleichsweise geringem Energieaufwand. Zudem ermöglicht sie ein wiederholt präzises Anfahren einer vorgegebenen Horizontalposition.

Am vorderen Ende des Horizontalauslegers 12 ist ein um eine vertikale Achse 15 verdrehbarer Knickarm 14 angeordnet. Am Knickarm 14 ist endseitig mittels einer Gelenkvorrichtung 16 ein Greifer 18 befestigt, mittels welchem Teile wie beispielsweise Werkzeuge und/oder Werkstücke und/oder Werkstückträger ergriffen und ggf. einer Bearbeitungsmaschine zugeführt und auch wieder daraus entnommen werden können. Die Gelenkvorrichtung 16 besitzt eine Drehachse 17, um welche der Greifer 18 verdrehbar ist. Im vorliegenden Beispiel ist schematisch eine Platte 19 eingezeichnet, welche vom Greifer 18 erfasst ist und einen Werkstückträger (Palette) zur Aufnahme eines Werkstücks symbolisieren soll. Normalerweise ist am Werkstückträger 19 das zu bearbeitende Werkstück fixiert, wobei dieses hier nicht dargestellt ist. Es versteht sich, dass der Greifer 18 unterschiedliche Gestalt besitzen kann, indem er beispielsweise mit beweglichen Greiffingern, Klemmelementen, form- und/oder kraftschlüssigen Greifelementen usw. versehen ist, wobei diese Elemente hier nicht näher dargestellt sind. Der Greifer 18 kann natürlich auch zum direkten Ergreifen von nicht palettierten Werkstücken ausgebildet sein. Die Drehachse 17 der Gelenkvorrichtung 16 schliesst mit der Senkrechten einen Winkel von vorzugsweise ca. 45° ein.

Die Länge des Knickarms 14 entspricht vorzugsweise zumindest dem 0.4 fachen des Horizontalauslegers 12. Üblicherweise liegt das Verhältnis der Länge des Knickarms 14 zu dem Horizontalausleger 12 zwischen 0.4:1 und 1:1. Anders ausgedrückt weist der Knickarm 14 eine bevorzugte Länge auf, die zumindest 40% jedoch maximal 100% der Länge des Horizontalauslegers 12 beträgt. Bei einer Länge des Horizontalauslegers 12 von ca. 2 Metern weist der Knickarm 14 somit eine Länge zwischen 0.8 und 2 Metern auf. Die Länge des Knickarms 14 ist insbesondere dann von entscheidender Bedeutung, wenn die Handhabungsanordnung 1 seitlich der Werkzeugmaschine angeordnet ist. In diesem Fall wird durch die Länge des Knickarms 14 massgeblich bestimmt, wie weit die Handhabungsanordnung 1 ihren Greifer 18 über eine frontale Öffnung in die Werkzeugmaschine einführen kann.

Sofern der Knickarm 14 deutlich kürzer ist als der Horizontalausleger 12, kann letzterer bei voller Beweglichkeit des Knickarms 14 in etwa um den Differenzwert zwischen dem Horizontalausleger 12 und dem Knickarm 14 horizontal verschoben werden. Durch die absolute Länge des Horizontalauslegers 12 wie auch des Knickarms 14 wird andererseits der Bewegungsbereich des Greifers 18 in radialer Richtung massgeblich bestimmt.

Der vertikale Hauptträger 2 ist mit zwei seitlichen Tragprofilen 20, 21 versehen, die zwischen sich eine zentrale Aussparung 22 begrenzen. Der Horizontalausleger 12 kann sich in diese Aussparung 22 erstrecken, so dass mit seinem rückwärtigen Ende durch diese Aussparung 22 nach hinten geschoben werden kann. Dadurch wird ein grosser Verschiebeweg des Horizontalauslegers 12 ermöglicht. An der Stirnseite des jeweiligen Tragprofils 20, 21 ist je eine Führungsschiene 23, 24 befestigt, welche zusammen der Führung des Vertikalschlittens 9 dienen. Vorzugsweise ist zumindest die eine der beiden Führungsschienen 23, 24 als Zahnschiene ausgebildet, damit ein am Vertikalschlitten 9 angeordnetes, elektromotorisch angetriebenes Zahnrad (nicht ersichtlich) formschlüssig angreifen kann, um dem Vertikalschlittens 9 nach oben oder unten verfahren zu können. Der Vertikalschlitten 9 ist vorzugsweise ebenfalls mittels einer Linearführung am Hauptträger 2 abgestützt. Dazu können die beiden Führungs- bzw. Zahnschienen 23, 24 mit einer Schwalbenschwanzführung versehen werden. Alternativ zu einem Zahnradantrieb kann beispielsweise auch ein Spindelantrieb, insbesondere mit einer Kugelumlaufspindel für den Vertikalschlitten 9, vorgesehen werden. Beide Antriebsvarianten ermöglichen jedenfalls ein wiederholt präzises Anfahren einer vorgegebenen Vertikalposition.

Der Drehteller 3, der Hauptschlitten 5, der Vertikalschlitten 9, der Horizontalausleger 12 sowie auch der Knickarm 14 sind elektromotorisch um die jeweilige Achse bzw. entlang der jeweiligen Achse bewegbar, wobei die zugehörigen elektromotorischen Antriebe nicht näher dargestellt sind. Der Greifer 18 ist ebenfalls mittels eines Elektromotors um die Drehachse 17 der Gelenkvorrichtung 16 verdrehbar. Die jeweiligen Antriebe sind zusammen mit den zugehörigen Getrieben derart ausgelegt, dass innerhalb des gesamten Bewegungsbereichs ein wiederholt präzises Anfahren der jeweiligen Position ermöglicht wird.

Die Fig. 2 zeigt die Handhabungsanordnung 1 gemäss Fig. 1, wobei der Hauptschlitten 5 etwas nach links verschoben wurde, während der Vertikalschlitten 9 etwas nach unten gefahren und der Horizontalauslegers 12 etwas nach hinten verschoben wurde. Zudem wurde der Greifer 18 zusammen mit dem Werkstückträger 19 mittels der Gelenkvorrichtung 16 um 180° gedreht.

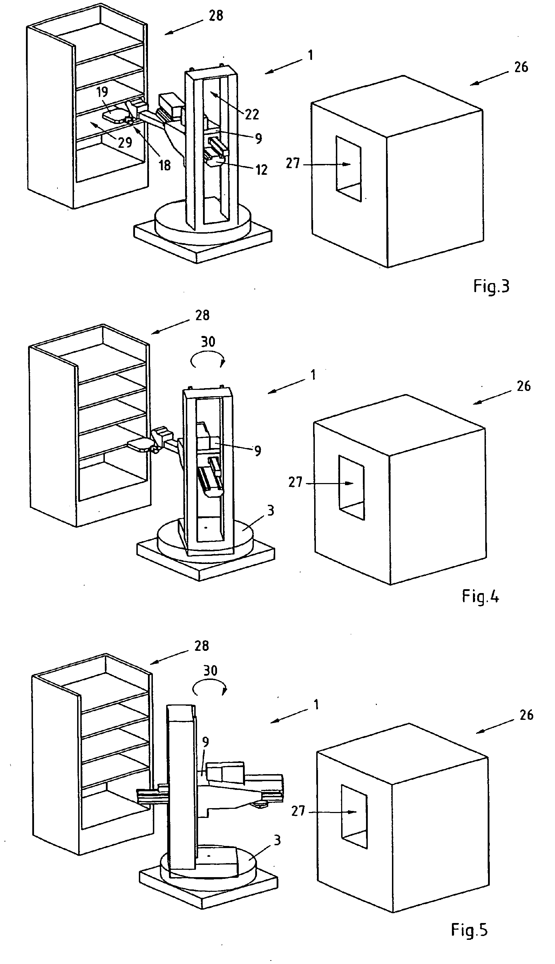

Anhand eines Beispiels soll nachfolgend die Wirkungsweise der Handhabungsanordnung 1 grundsätzlich erläutert werden, wobei zur Erläuterung auf die Fig. 3 bis 8 Bezug genommen wird. In diesen Figuren ist jeweils die Handhabungsanordnung 1 zusammen mit einer schematisch dargestellten Werkzeugmaschine 26 sowie einem Magazin 28 zur Aufnahme von Werkstücken und/oder Werkstückträgern und/oder Werkzeugen dargestellt. Die Handhabungsanordnung 1 ist seitlich der Werkzeugmaschine 26 angeordnet, wobei die Werkzeugmaschine 26 mit einer frontalen Öffnung 27 versehen ist, über welche die Maschine 26 grundsätzlich zugänglich ist und über welche auch Werkstücke bzw. Werkzeuge zugeführt bzw. entnommen werden können. Aufgrund der seitlichen Platzierung der Handhabungsanordnung 1 wird im Normalfall, d.h. wenn sich die Handhabungsanordnung 1 in ihrer von der Werkzeugmaschine 26 abgewandten Ruhestellung befindet, ein ungehinderter Zugang zu der Werkzeugmaschine 26 über deren frontale Öffnung 27 ermöglicht. Aus der Darstellungen gemäss den Figuren 3 und 4 ist zudem ersichtlich, dass sich der Horizontalausleger 12 durch die Aussparung 22 im Hauptträger 2 erstrecken kann.

Die Fig. 3 zeigt, wie der Greifer 18 einen Werkstückträger 19 aus einem Magazinfach 29 das Magazins 28 entnimmt. Dazu wird der Werkstückträger 19 zuerst mittels des Greifers 18 erfasst, der Vertikalschlitten 9 danach etwas angehoben und der Horizontalausleger 12 nach hinten gefahren. Anschliessend wird der Drehteller 3, wie in den Fig. 4 und 5 durch einen Pfeil 30 angedeutet, im Uhrzeigersinn gedreht, wobei während des Drehvorgangs der Vertikalschlitten 9 bereits in die gewünschte Vertikalposition verfahren werden kann.

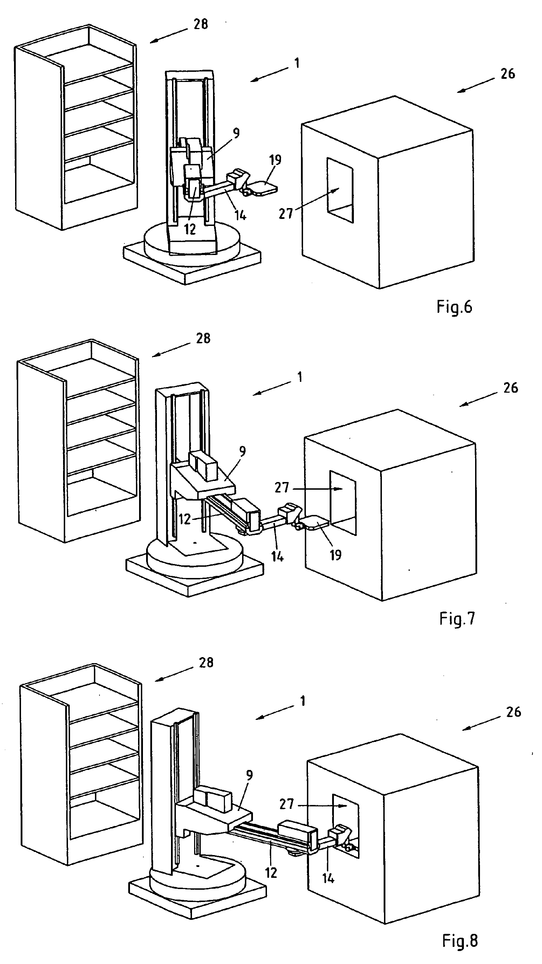

In der Fig. 6 ist die Handhabungsanordnung 1 kurz vor dem Ende des Drehvorgangs ersichtlich. Um den Werkstückträger 19 aus dieser Position der Werkzeugmaschine 26 zuführen zu können, wird der Horizontalausleger 12 nach vorne gefahren und gleichzeitig der Knickarm 14 in diejenige Position gebracht, aus der der Werkstückträger 19 über die frontale Öffnung 27 der Werkzeugmaschine 26 zugeführt werden kann, wie dies in der Fig. 7 angedeutet ist.

Wie in den Figuren 7 und 8 ersichtlich ist, wird der Werkstückträger der Werkzeugmaschine 26 über die frontale Öffnung 27 zugeführt, wobei das eigentliche Zuführen durch eine kombinierte Bewegung der Teile der Handhabungsanordnung 1, namentlich einer Drehbewegung des Drehtellers 3 zusammen mit einem vertikalen Verfahren des Vertikalschlittens 9, einem horizontalen Verschieben des Horizontalauslegers 12 sowie einem gleichzeitigen Eindrehen des Knickarms 14 erfolgt. Aus den Darstellungen gemäss den Figuren 7 und 8 ist zudem ersichtlich, dass der Knickarm 14 eine bestimmte Mindestlänge aufweisen muss, damit der Greifer bei seitlicher Anordnung der Handhabungsanordnung 1 entsprechend tief in die Öffnung 27 eingeführt werden kann. In diesem Zusammenhang hat es sich bewährt, dass die Länge des Knickarms 14 vorzugsweise zumindest dem 0.4 fachen des Horizontalauslegers 12 entspricht. Sofern der Hauptträger 2 auf einem horizontal verfahrbaren Hauptschlitten 5 fixiert ist (Fig. 1), kann noch eine überlagerte Bewegung des Hauptschlittens 5 dazu kommen. Das Vorsehen eines Hauptschlittens 5 macht insbesondere dann Sinn, wenn die Handhabungsanordnung 1 mehrere Werkzeugmaschinen bedienen soll und/oder aus mehreren Magazinen Werkstücke bzw. Werkzeuge entnehmen können bzw. darin ablegen soll.

Je nach Anordnung und Anwendung der Handhabungsanordnung 1 kann es Sinn machen, den Drehteller 3 derart auszubilden, dass diese um mehr als 360° um die vertikale Achse 4 verdrehbar ist.

Die dargestellte Handhabungsanordnung 1 ist vergleichsweise einfach aufgebaut und kann kostengünstig hergestellt werden, zumal nur der dem Verschieben des Vertikalschlittens 9 dienende Motor eine vergleichsweise hohe Leistung aufweisen muss, damit auch grosse Lasten gehoben werden können. Demgegenüber können die zum Bewegen des Hauptschlittens 5 wie auch des Horizontalauslegers 12 und des Knickarms 14 jeweils vorgesehenen Motoren entsprechend klein dimensioniert werden, da diese keine Lasten heben müssen, sondern neben der zu beschleunigenden Masse im Wesentlichen nur Reibkräfte überwinden müssen. Jedenfalls eignet sich die gezeigte Handhabungsanordnung 1 auch zum Handhaben von Werkzeugen oder Werkstücken mit Gewichten von über 100 Kilogramm. Zudem ist die Handhabungsanordnung 1 universell einsetzbar und der Greifer 18 kann die innerhalb seines Einsatzbereichs liegenden Positionen wiederholt präzise anfahren.

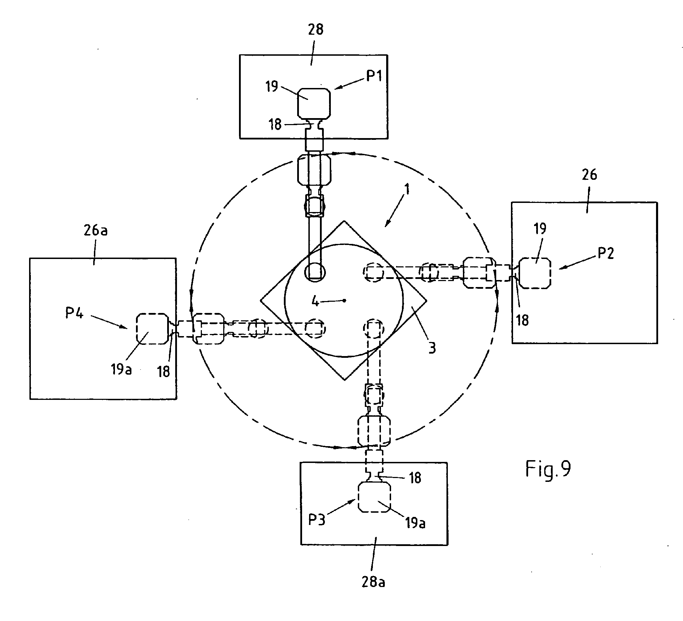

Die Fig. 9 schliesslich zeigt eine Draufsicht auf eine schematisch dargestellte Werkzeugmaschinenanordnung, welche eine Handhabungsanordnung 1, zwei Werkzeugmaschinen 26, 26a sowie zwei Magazine 28, 28a umfasst. Die beiden Werkzeugmaschinen 26, 26a sowie die Magazine 28, 28a sind entlang eines Kreisrings um die Handhabungsanordnung 1 herum angeordnet. Daher muss die Handhabungsanordnung 1 in diesem Fall nicht auf einem horizontal verfahrbaren Hauptschlitten angeordnet werden, sondern es genügt, die Handhabungsanordnung 1 auf einer um eine vertikale Achse 4 drehbaren Platte 3 anzuordnen. Vorzugsweise ist die Handhabungsanordnung 1 in diesem Fall um mehr als 360° um die vertikale Achse 4 drehbar, wodurch die Handlinggeschwindigkeit für gewisse Anwendungsfälle erheblich gesteigert werden kann, wie nachfolgend anhand eines Beispiels erläutert wird.

Soll beispielsweise der Maschine 26 ein Werkstück 19 aus dem Magazin 28 zugeführt werden, so muss die Handhabungsanordnung 1 zuerst ihren Greifer 18 in die Position P1 bringen. Danach muss eine Drehbewegung um 90° im Uhrzeigersinn erfolgen, damit der Greifer 18 die Position P2 einnehmen kann, in der das Werkstück 19 der Maschine 26 zugeführt werden kann. Als nächstes soll der Maschine 26a ein Werkstück 19a aus dem Magazin 28a zugeführt werden. Dazu muss die Handhabungsanordnung 1 zuerst wiederum eine Drehbewegung um 90° im Uhrzeigersinn ausführen, damit der Greifer 18 die Position P3 einnimmt. Aus der Position P3 muss die Handhabungsanordnung 1 nochmals eine Drehbewegung um 90° im Uhrzeigersinn ausführen, damit das Werkstück 19a der Maschine 26a zugeführt werden kann. Sofern die Handhabungsanordnung 1 um mehr als 360° um die vertikale Achse 4 gedreht werden kann, kann diese nun durch eine weitere Drehbewegung um 90° im Uhrzeigersinn aus dem Magazin 28 ein Werkstück entnehmen und danach der Maschinen 26 zuführen. Jedenfalls kann der Schwenkvorgang in diesem Fall von 270° auf 90° reduziert werden, was eine erhebliche Geschwindigkeitssteigerung zur Folge hat. Es versteht sich, dass der beschriebene Vorgang lediglich beispielhaften Charakter hat. Jedenfalls kann die Handhabungsanordnung 1 aus beiden Magazinen 28, 28a Werkstücke, oder auch Werkzeuge, entnehmen und diese jeder der beiden Maschinen 26, 26a zuführen, wobei die Schwenkbewegung der Handhabungsanordnung 1 im Maximum 180° betragen muss.

Indem die Handhabungsanordung
- einen um eine vertikale Achse drehbaren Hauptträger, und
- einen über einen vertikal verfahrbaren Vertikalschlitten am Hauptträger abgestützten Horizontalausleger aufweist, und
- der Horizontalausleger einen um eine vertikale Achse verdrehbaren Knickarm aufweist, an dem endseitig der Greifer angeordnet ist, wobei
- der Horizontalausleger mittels einer Linearführung horizontal verfahrbar auf der Unterseite des Vertikalschlittens abgestützt ist, und
ist die Handhabungsanordung universell einsetzbar und eignet sich in besonders vorteilhafter Weise, um einer Werkzeugmaschine von vorne Werkstücke oder Werkzeuge zuzuführen bzw. zu entnehmen. Eine derart gestaltete Handhabungsanordung kann seitlich der Werkzeugmaschine angeordnet werden, so dass der Zugang zu der Werkzeugmaschine nicht nennenswert behindert wird.

Die Handhabungsanordung weist zudem eine gute Beweglichkeit und einen grossen Aktionsradius des Greifers auf. Durch die vergleichsweise geringe Anzahl an Bauteilen in Verbindung mit den wenigen Linear- und Drehachsen ist sie zudem relativ einfach und stabil aufgebaut, so dass auch grosse Lasten aufgenommen werden können. Eine kombinierte Bewegung mehrerer Elemente der Handhabungsanordnung optimiert zudem den Bewegungsablauf und verringert die Zugriffszeit.

## Patentansprüche

1. Handhabungsanordnung mit einem sich in vertikaler Richtung erstreckenden, um eine vertikale Achse (4) drehbaren Hauptträger (2), einem über einen vertikal verfahrbaren Vertikalschlitten (9) am Hauptträger (2) abgestützten Horizontalausleger (12) sowie einem direkt oder indirekt am Horizontalausleger (12) abgestützten Greifer (18), wobei der Horizontalausleger (12) mit einem um eine vertikale Achse (15) verdrehbaren Knickarm (14) versehen ist, an dem endseitig der Greifer angeordnet ist, **dadurch gekennzeichnet, dass** der Horizontalausleger (12) mittels einer Linearführung horizontal verfahrbar auf der Unterseite des Vertikalschlittens (9) abgestützt ist.

2. Handhabungsanordnung nach Anspruch 1, **dadurch gekennzeichnet, dass** der Hauptträger (2) auf einem horizontal verfahrbaren Hauptschlitten (5) befestigt ist.

3. Handhabungsanordnung nach Anspruch 1 oder 2, **dadurch gekennzeichnet, dass** der Hauptträger (2) um mehr als 360° um die vertikale Achse (4) drehbar ist.

4. Handhabungsanordnung nach einem der vorhergehenden Ansprüche, **dadurch gekennzeichnet, dass** das Verhältnis der Länge des Knickarms (14) zu dem Horizontalausleger (12) zwischen 0.4:1 und 1:1 liegt.

5. Handhabungsanordnung nach einem der vorhergehenden Ansprüche, **dadurch gekennzeichnet, dass** der Greifer (18) mittels einer Gelenkvorrichtung (16) am Knickarm (14) abgestützt ist, wobei die Drehachse (17) der Gelenkvorrichtung (16) mit der Senkrechten einen Winkel zwischen 30° und 60°, vorzugsweise 45° einschliesst.

6. Handhabungsanordnung nach einem der vorhergehenden Ansprüche, **dadurch gekennzeichnet, dass** der Hauptträger (2), der Horizontalausleger (12) wie auch der Knickarm (14) elektromotorisch um die jeweilige Achse bzw. entlang der jeweiligen Achse bewegbar sind.

7. Handhabungsanordnung nach einem der vorangehenden Ansprüche, **dadurch gekennzeichnet, dass** der Hauptträger (2) mit einer länglichen, sich in vertikaler Richtung erstreckenden Aussparung (22) versehen ist, in welche sich der Horizontalausleger (12) erstrecken kann.

8. Handhabungsanordnung nach Anspruch 7, **dadurch gekennzeichnet, dass** der Vertikalschlitten (9) auf beiden Seiten der Aussparung (22) verfahrbar am Hauptträger (2) abgestützt ist.

9. Handhabungsanordnung nach Anspruch 8, **dadurch gekennzeichnet, dass** auf beiden Seiten der Aussparung (22) je eine sich in vertikaler Richtung erstreckende Zahnschiene (23, 24) angeordnet ist, wobei die Zahnschienen (23, 24) der Führung des Vertikalschlittens (9) sowie dem kraftschlüssigen Abstützen desselben am Hauptträger (2) dienen.

10. Handhabungsanordnung nach Anspruch 9, **dadurch gekennzeichnet, dass** der Vertikalschlitten (9) mit Zahnrädern zum formschlüssigen Angreifen an der jeweiligen Zahnschiene (23, 24) versehen ist, wobei die Zahnräder elektromotorisch angetrieben sind und zum vertikalen Verschieben des Vertikalschlittens (9) ausgebildet sind.

11. Handhabungsanordnung nach einem der vorangehenden Ansprüche, **dadurch gekennzeichnet, dass** der Hauptträger (2) auf einem um eine vertikale Achse (4) drehbaren Drehteller (3) angeordnet ist.

12. Handhabungsanordnung nach Anspruch 11, **dadurch gekennzeichnet, dass** der Hauptträger (2) zentrisch auf dem Drehteller (3) angeordnet ist.

13. Handhabungsanordnung nach Anspruch 11, **dadurch gekennzeichnet, dass** der Hauptträger (2) exzentrisch auf dem Drehteller (3) angeordnet ist.

14. Handhabungsanordnung nach einem der vorangehenden Ansprüche, **dadurch gekennzeichnet, dass** der Greifer (18) zum Erfassen von Werkstücken und/oder Werkstückträgern und/oder Werkzeugen ausgebildet ist.

15. Verwendung einer nach einem der Ansprüche 1 bis 14 ausgebildeten Handhabungsanordnung (1) zum Zuführen von Werkstücken und/oder Werkzeugen zu einer Werkzeugmaschine (26) bzw. zum Entnehmen von Werkstücken und/oder Werkzeugen aus einer Werkzeugmaschine (26).

16. Werkzeugmaschinenanordnung, mit einer Werkzeugmaschine (26), die eine frontale Öffnung (27) zum Zuführen und Entnehmen von Werkzeugen und/oder Werkstücken aufweist, sowie einer nach einem der Ansprüche 1 bis 14 ausgebildeten Handhabungsanordnung (1), **dadurch gekennzeichnet, dass** die Handhabungsanordnung (1) seitlich der frontalen Öffnung (27) der Werkzeugmaschine (26) angeordnet ist.

17. Werkzeugmaschinenanordnung nach Anspruch 16, **dadurch gekennzeichnet, dass** im Bewegungsbereich der Handhabungsanordnung (1) ein Magazin (28) zur Aufnahme von Werkzeugen und/oder Werkstücken und/oder Werkstückträgern angeordnet ist.

18. Werkzeugmaschinenanordnung, mit zumindest zwei Werkzeugmaschinen, die jeweils eine frontale Öffnung (27) zum Zuführen und Entnehmen von Werkzeugen und/oder Werkstücken und/oder Werkstückträgern aufweisen, sowie einer nach dem Anspruch 3 ausgebildeten Handhabungsanordnung, **dadurch gekennzeichnet, dass** die Handhabungsanordnung (1) auf dem Schlitten (5) entlang der Werkzeugmaschinen verfahrbar angeordnet ist und/oder um mehr als 360° um die vertikale Achse (4) drehbar ist..

## Claims

1. Handling device comprising a vertically extending main support (2) rotatable about a vertical axis (4), a horizontal extension arm (12) supported on the main support (2) via a vertically traversable vertical slide (9), and a gripper (18) supported directly or indirectly on the horizontal extension arm (12), the horizontal extension arm (12) being provided with a buckling arm (14) which is rotatable about a vertical axis (15) and on the end of which the gripper is arranged, **characterized in that** the horizontal extension arm (12) is supported on the underside of the vertical slide (9) in such a way as to be horizontally traversable by means of a linear guide.

2. Handling device according to Claim 1,
**characterized in that** the main support (2) is fastened to a horizontally traversable main slide (5).

3. Handling device according to Claim 1 or 2, **characterized in that** the main support (2) is rotatable about the vertical axis (4) by more than 360°.

4. Handling device according to one of the preceding claims, **characterized in that** the ratio of the length of the buckling arm (14) to the length of the horizontal extension arm (12) is between 0.4:1 and 1:1.

5. Handling device according to one of the preceding claims, **characterized in that** the gripper (18) is supported on the buckling arm (14) by means of an articulation device (16), wherein the rotation axis (17) of the articulation device (16) encloses an angle of between 30° and 60°, preferably 45°, with the vertical.

6. Handling device according to one of the preceding claims, **characterized in that** the main support (2), the horizontal extension arm (12) and the buckling arm (14) can be moved about the respective axis or along the respective axis by electric motor.

7. Handling device according to one of the preceding claims, **characterized in that** the main support (2) is provided with an elongated, vertically extending aperture (22), into which the horizontal extension arm (12) can extend.

8. Handling device according to Claim 7, **characterized in that** the vertical slide (9) is supported in a traversable manner on the main support (2) on both sides of the aperture (22).

9. Handling device according to Claim 8, **characterized in that** a vertically extending rack rail (23, 24) is arranged on each side of the aperture (22), wherein the rack rails (23, 24) serve to guide the vertical slide (9) and frictionally support the same on the main support (2).

10. Handling device according to Claim 9, **characterized in that** the vertical slide (9) is provided with gears for positive-locking engagement on the respective rack rail (23, 24), wherein the gears are driven by electric motor and are designed for vertically displacing the vertical slide (9).

11. Handling device according to one of the preceding claims, **characterized in that** the main support (2) is arranged on a rotary plate (3) rotatable about a vertical axis (4).

12. Handling device according to Claim 11, **characterized in that** the main support (2) is arranged centrally on the rotary plate (3).

13. Handling device according to Claim 11, **characterized in that** the main support (2) is arranged eccentrically on the rotary plate (3).

14. Handling device according to one of the preceding claims, **characterized in that** the gripper (18) is designed for taking hold of workpieces and/or work carriers and/or tools.

15. use of a handling device (1) designed according to one of Claims 1 to 14 for feeding workpieces and/or tools to a machine tool (26) or for removing workpieces and/or tools from a machine tool (26).

16. Machine tool arrangement comprising a machine tool (26), which has a front opening (27) for feeding and removing tools and/or workpieces, and a handling device (1) designed according to one of Claims 1 to 14, **characterized in that** the handling device (1) is arranged to the side of the front opening (27) of the machine tool (26).

17. Machine tool arrangement according to Claim 16, **characterized in that** a magazine (28) for accommodating tools and/or workpieces and/or work carriers is arranged within the range of movement of the handling device (1).

18. Machine tool arrangement comprising at least two machine tools, which have a respective front opening (27) for feeding and removing tools and/or workpieces and/or work carriers, and a handling device designed according to Claim 3, **characterized in that** the handling device (1) is arranged on the slide (5) such as to be traversable along the machine tools and/or is rotatable about the vertical axis (4) by more than 360°.

## Revendications

1. Agencement de manipulation avec un support principal (2) pouvant pivoter autour d'un axe vertical (4), s'étendant dans le sens vertical, un bras horizontal (12) en appui par le biais d'un chariot vertical (9) mobile verticalement contre le support principal (2) ainsi qu'une pince (18) en appui directement ou indirectement contre le bras horizontal (12), le bras horizontal (12) étant pourvu d'un bras articulé (14) pouvant être pivoté autour d'un axe (15) vertical, sur lequel la pince est disposée côté extrémité, **caractérisé en ce que** le bras horizontal (12) est en appui à l'aide d'un guidage linéaire de manière mobile horizontalement sur le côté inférieur du chariot vertical (9).

2. Agencement de manipulation selon la revendication 1, **caractérisé en ce que** le support principal (2) est fixé sur un chariot principal (5) mobile horizontalement.

3. Agencement de manipulation selon la revendication 1 ou 2, **caractérisé en ce que** le support principal (2) peut être pivoté de plus de 360° autour de l'axe (4) vertical.

4. Agencement de manipulation selon l'une quelconque des revendications précédentes, **caractérisé en ce que** le rapport entre la longueur du bras articulé (14) et le bras horizontal (12) est compris entre 0,4:1 et 1:1.

5. Agencement de manipulation selon l'une quelconque des revendications précédentes, **caractérisé en ce que** la pince (18) est en appui à l'aide d'un dispositif articulé (16) contre le bras articulé (14), l'axe de rotation (17) du dispositif articulé (16) formant avec la perpendiculaire un angle compris entre 30 et 60°, de préférence 45°.

6. Agencement de manipulation selon l'une quelconque des revendications précédentes, **caractérisé en ce que** le support principal (2), le bras horizontal (12) ainsi que le bras articulé (14) peuvent être déplacés par moteur électrique autour de l'axe respectif ou le long de l'axe respectif.

7. Agencement de manipulation selon l'une quelconque des revendications précédentes, **caractérisé en ce que** le support principal (2) est pourvu d'un évidement (22) oblong, s'étendant dans le sens vertical, dans lequel le bras horizontal (12) peut s'étendre.

8. Agencement de manipulation selon la revendication 7, **caractérisé en ce que** le chariot vertical (9) est en appui de manière mobile des deux côtés de l'évidement (22) contre le support principal (2).

9. Agencement de manipulation selon la revendication 8, **caractérisé en ce que** des deux côtés de l'évidement (22) est disposée une crémaillère (23, 24) s'étendant dans le sens vertical, les crémaillères (23, 24) servant au guidage du chariot vertical (9) ainsi qu'à l'appui par friction de celui-ci contre le support principal (2).

10. Agencement de manipulation selon la revendication 9, **caractérisé en ce que** le chariot vertical (9) est pourvu de roues dentées pour l'application par correspondance de formes sur la crémaillère (23, 24) respective, les roues dentées étant entraînées par moteur électrique et étant réalisées pour le déplacement vertical du chariot vertical (9).

11. Agencement de manipulation selon l'une quelconque des revendications précédentes, **caractérisé en ce que** le support principal (2) est disposé sur un plateau tournant (3) autour d'un axe (4) vertical.

12. Agencement de manipulation selon la revendication 11, **caractérisé en ce que** le support principal (2) est disposé de manière centrale sur le plateau tournant (3).

13. Agencement de manipulation selon la revendication 11, **caractérisé en ce que** le support principal (2) est disposé de manière excentrée sur le plateau tournant (3).

14. Agencement de manipulation selon l'une quelconque des revendications précédentes, **caractérisé en ce que** la pince (18) est réalisée pour la préhension de pièces à usiner et/ou de porte-pièces et/ou d'outils.

15. Utilisation d'un agencement de manipulation (1) réalisé selon l'une quelconque des revendications 1 à 14 pour l'amenée de pièces à usiner et/ou d'outils à une machine-outil (26) ou pour le prélèvement de pièces à usiner et/ou d'outils d'une machine-outil (26).

16. Agencement de machine-outil avec une machine-outil (26) qui présente une ouverture (27) frontale pour l'amenée et le prélèvement d'outils et/ou de pièces à usiner, ainsi qu'un agencement de manipulation (1) réalisé selon l'une quelconque des revendications 1 à 14, **caractérisé en ce que** l'agencement de manipulation (1) est disposé à côté de l'ouverture frontale (27) de la machine-outil (26).

17. Agencement de machine-outil selon la revendication 16, **caractérisé en ce qu'**un magasin (28) pour le logement d'outils et/ou de pièces à usiner et/ou de porte-pièces est disposé dans la zone de déplacement de l'agencement de manipulation (1).

18. Agencement de machine-outil avec au moins deux machines-outils qui présentent chacune une ouverture (27) frontale pour l'amenée et le prélèvement d'outils et/ou de pièces à usiner et/ou de porte-outils, ainsi qu'un agencement de manipulation réalisé selon la revendication 3, **caractérisé en ce que** l'agencement de manipulation (1) est disposé de manière mobile sur le chariot (5) le long des machines-outils et/ou peut être pivoté de plus de 360° autour de l'axe vertical (4).
